# EUROPÄISCHE PATENTSCHRIFT

(11) **EP 1 128 125 B1**
(45) Veröffentlichungstag und Bekanntmachung des Hinweises auf die Patenterteilung: **16.11.2005**
(21) Anmeldenummer: 01103150.7
(22) Anmeldetag: 10.02.2001
(51) Int. Cl.: B60Q 1/14, F21V 14/08

(54) **Betätigungsvorrichtung für eine Blende in einem Kraftfahrzeugscheinwerfer**
Actuator for a light shield in a motor vehicle headlamp
Dispositif de manoeuvre pour un cache dans un projecteur pour véhicule automobile

(30) Priorität: 25.02.2000 DE 10008935
(43) Veröffentlichungstag der Anmeldung: 29.08.2001
(73) Patentinhaber: Hella KGaA Hueck & Co., 59552 Lippstadt (DE)
(72) Erfinder: Möller, Stefan, 59557 Lippstadt (DE); Strauch, Martin, 59929 Brilon (DE)

(56) Entgegenhaltungen:
- DE-A- 1 655 867
- GB-A- 329 964
- GB-A- 388 064
- US-A- 2 541 834

## Beschreibung

Die Erfindung betrifft eine Betätigungsvorrichtung für eine Blende in einem Kraftfahrzeugscheinwerfer mit einem elektromechanischen Aktuator, dessen Anker die Blendenstellung beeinflußt.

Blenden, die mittels eines elektromechanischen Aktuators betätigt werden, kommen insbesondere bei in Kraftfahrzeugen zunehmend verwendeten Hochdruckgasentladungslampen zur Umschaltung zwischen Fern- und Abblendlicht zur Anwendung.

Bei einem elektromagnetischen Aktuator ist für die Überbrückung des durch den Luftspalt erhöhten magnetischen Widerstandes ein erhöhter Anfangsstrom (Anzugstrom) erforderlich. Für den bei geschlossenem Luftspalt wesentlich verringerten magnetischen Widerstand genügt zum Halten der Blende in der angezogenen Position ein wesentlich geringerer Haltestrom. Hierzu werden bisher elektronische Regelungen eingesetzt.

Aus der GB 388,064 ist eine Anti-Blendungs-Vorrichtung für Scheinwerfer bekannt, bei der eine über ein Hebelwerk elektromagnetisch angetriebene zylinderförmige Blende den Strahlengang des von einer Glühlampe ausgesendeten Lichtes teilweise unterbricht. Der elektromagnetische Antrieb verfügt über einen Endanschlag, der mit einer Schaltung gekoppelt ist, die durch Abschaltung einzelner Spulenwindungen den Haltestrom vermindert.

Aufgabe der Erfindung ist es, eine Betätigungsvorrichtung für eine Blende in einem Kraftfahrzeugscheinwerfer einfacher und kostengünstiger auszubilden.

Diese Aufgabe wird durch die im Kennzeichnenden Teil offenbarten technischen Merkmale gelöst.

Um die Spulenanordnung des Aktuators möglichst einfach und kostengünstig auszugestalten, ist es vorteilhaft, wenn die Spulenanordnung aus genau zwei Wicklungen besteht. Die Wicklungen können im Hinblick auf ihre Funktionen durchaus unterschiedlich ausgebildet sein und insbesondere unterschiedliche Windungszahlen aufweisen.

Das Schaltelement ist vorteilhafterweise direkt mit der Blende verbunden oder sogar einstückig mit der Blende ausgebildet.

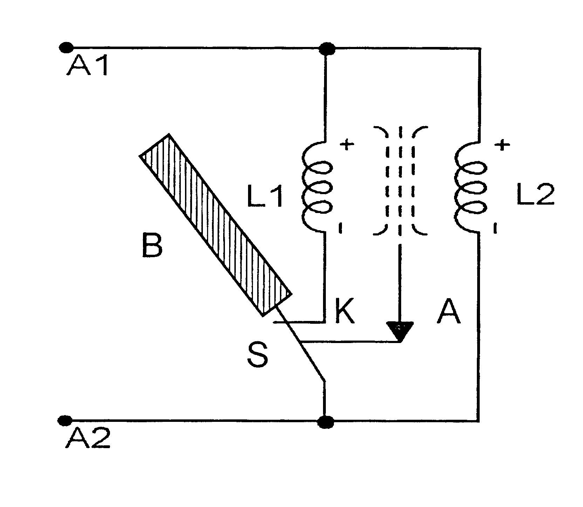

Ein schematisch dargestelltes Ausführungsbeispiel der erfindungsgemäßen Vorrichtung wird im folgenden anhand der Zeichnung näher erläutert.

Die einzige Figur zeigt die Betätigungsvorrichtung in einer schematischen Darstellung. Diese Spulenanordnung ist hierbei durch zwei Wicklungen L1, L2 einer Spule oder zweier Spulen ausgebildet. Durch die Verschaltung der Doppelspule wird ein Aktuator mit reduzierter Dauerverlustleistung und verstärktem Anzugsmoment einfach realisiert.

Zur Betätigung des Aktuators werden seine beiden Wicklungen über die Anschlußleitungen A1, A2 mit Spannung versorgt. Die Wicklung L1 ist hierbei über einen geschlossenen Öffnerkontakt K des Schaltelements S mit der Anschlußleitung A2 verbunden. Das Schaltelement S steht sowohl mit dem Anker A des Aktuators als auch mit der Blende B des Kraftfahrzeugscheinwerfers in mechanischer Verbindung.

Im Ruhezustand des Aktuators ist der Luftspalt groß, also muß für eine bestimmte Kraft das Produkt aus Windungszahl und Spulenstrom groß sein. Im eingeschalteten Zustand ist mit dem wesentlich verringerten Luftspalt der magnetische Widerstand geringer und somit für eine aufzubringende Kraft weniger Strom l bzw. eine geringere Durchflutung erforderlich.

Durch Parallelschaltung der beiden Wicklungen L1, L2 wird die notwendige magnetische Durchflutung für das Anzugsmoment erzeugt. Kurz vor dem Schließen des Luftspaltes wird über den Öffnerkontakt K die niederohmige Anzugswicklung L1 abgeschaltet. Durch den jetzt deutlich verringerten Luftspalt, sowie die im System enthaltene Bewegungsenergie und die Tatsache, daß der abgeschaltete Strom durch die Wicklung L1 durch die Verkopplung der beiden Spulen in L2 eine Stromerhöhung verursacht, wird eine für die Überwindung des restlichen Stellweges ausreichende Kraft im Aktuator erzeugt.

### Bezugszeichen

- A1, A2: Anschlußleitungen
- B: Blende
- K: Öffnerkontakt
- L1, L2: Wicklungen
- S: Schaltelement

## Patentansprüche

1. Betätigungsvorrichtung für eine Blende in einem Kraftfahrzeugscheinwerfer mit einem elektromechanischen Aktuator, dessen Anker die Blendenstellung beeinflußt, wobei der Aktuator eine Spulenanordnung mit mindestens zwei Wicklungen (L1, L2) zur magnetischen Felderzeugung aufweist und wobei mit dem Aktuator mindestens ein durch die Aktuatorbewegung gesteuertes Schaltelement (S) verbunden ist, welches mindestens eine der Wicklungen (L1) schaltet, wobei das Schaltelement (S) mindestens einen Öffnerkontakt K besitzt und eine der beiden Wicklungen (L1, L2) kurz vor Erreichen der Endposition des Aktuators abschaltet,
**dadurch gekennzeichnet,**
**dass** die beiden Wicklungen (L1, L2) parallel geschaltet sind, wobei die geschaltete Wicklung (L1) niederohmig ist.

2. Betätigungsvorrichtung nach Anspruch 1, **dadurch gekennzeichnet, daß** die Spulenanordnung des Aktuators aus zwei Wicklungen (L1, L2) besteht und die Wicklungen (L1, L2) unterschiedliche Windungszahlen aufweisen .

3. Betätigungsvorrichtung nach Anspruch 1, **dadurch gekennzeichnet, daß** das Schaltelement (S) mit der Blende (B) verbunden oder einstückig mit der Blende (B) ausgebildet ist.

## Claims

1. A control mechanism for a light shield in a motor-vehicle headlamp, with an electromechanical actuator, the armature of which influences the position of the shield, wherein the actuator has a coil arrangement comprising at least two windings (L1, L2) for magnetic-field generation, and wherein at least one switching element (S) is attached to the actuator and controlled by the movement of said actuator and switches at least one of the windings (L1), said switching element (S) having at least one break (NC) contact K and disconnecting one of the two windings (L1, L2) just before the end position of the actuator is reached,
**characterized in that**
the two windings (L1, L2) are connected in parallel, the switched winding (L1) being of low resistance.

2. A control mechanism according to Claim 1, **characterized in that** the coil arrangement of the actuator consists of two windings (L1, L2) and the windings (L1, L2) have different numbers of turns.

3. A control mechanism according to Claim 1, **characterized in that** the switching element (S) is attached to the light shield (B) or is formed in one piece with the light shield (B).

## Revendications

1. Dispositif d'actionnement pour un cache dans un projecteur de véhicule automobile, comportant un actionneur électromécanique, dont l'armature influe sur la position du cache, dans lequel l'actionneur comporte un dispositif de bobines comprenant au moins deux enroulements (L1,L2) pour la production d'un champ magnétique et dans lequel l'actionneur est relié au moins à un élément de commutation (S) qui est commandé par le déplacement de l'actionneur et branche au moins l'un des enroulements (L1), l'élément de commutation (S) possédant au moins un contact d'ouverture K et débranche l'un des deux enroulements (L1,L2) peu avant d'atteindre la position d'extrémité de l'actionneur,
**caractérisé en ce**
**que** les deux enroulements (L1,L2) sont branchés en parallèle, l'enroulement branché (L1) possédant une faible valeur ohmique.

2. Dispositif d'actionnement selon la revendication 1, **caractérisé en ce que** le dispositif de bobines de l'actionneur est constitué de deux enroulements (L1,L2) et que les enroulements (L1,L2) possèdent des nombres différents de spires.

3. Dispositif selon la revendication 1, **caractérisé en ce que** l'élément de commutation (S) est relié au cache (B) ou est agencé d'un seul tenant avec le cache (B).
